# EUROPEAN PATENT APPLICATION

(11) **EP 2 495 862 A2**
(43) Date of publication of application: **05.09.2012**
(21) Application number: 11010005.4
(22) Date of filing: 20.12.2011
(51) Int. Cl.: H02M 5/458

(54) **Multilevel power converter or inverter arrangement using H bridges**

(30) Priority: 22.12.2010 ES 201001600
(71) Applicant: Gamesa Innovation & Technology, S.L., 31621 Sarriguren (ES)
(72) Inventor: Mayor Miguel, Alvar, 28043 Madrid (ES); Agudo Araque, Andres, 28043 Madrid (ES)

(57) **Abstract**

Multilevel voltage arrangement having a transformer and a power converter or inverter comprising one or more common DC links connectable to a power source, said arrangement comprising one first set of H bridges being connected to said common DC link, wherein each of said H bridges comprises with at least two nodes connected to the ends of wirings at the primary side of a transfer, wherein control means are configured for controlling H bridges so as to achieve a multilevel voltage signal between the first node and the second node of said H bridges.

## Description

### FIELD OF THE INVENTION

The present invention refers to a multilevel power converter topology and an arrangement for generators, preferably for in wind turbine applications.

### BACKGROUND OF THE INVENTION

Several voltage source converters are known to use H bridge topologies. H bridges are used for obtaining multilevel waveforms. H bridges are driven by a number of different switching cells. Open and close states of said switches determine the output voltage for a load winding connected to them. Their use is however limited to applications in DC/DC converter systems or single phase AC applications.

Known three phase applications having H bridge topologies and architectures use AC side isolation transformers for applications related to series actives filters, dynamic voltage restorers and static synchronous compensators (statcom).

These applications are described in several disclosures. Series active filters are found in publication by F.Z. Peng, H.Agaki, A. Nabase, "A new approach to harmonic compensation in power systems - a combined system of shunt passive and series active filters", IEEE Trans. on Ind. Applications, Volg.26, No. 6 ppages 983-990, November/December 1990.

Dynamic voltages restorers are described in another publication by H.Kim, S.K.Sul "Compensation voltage control in dynamic restorers by use of feed forward and state feedback scheme", IEEE Trans. on power electronics, vol. 20 No.5, pages 1169-1177, September 2005.

Examples in the prior art show voltage multilevel converter topologies that require a large number of components and are difficult to implement and control. Moreover, said arrangements require the interplay of common DC links with high voltage DC values.

Two voltage level topologies used in the prior art show an excess of harmonics behaviour. The total harmonic distortion (THD) is then less than optimal for such systems. It is an object of the present invention to propose a power converter topology and an arrangement for generators preferably for wind turbine applications that shows an optimal reduction of harmonics and yet it has a simple construction and topology arrangement.

It is another object of the present invention to propose a multilevel converter and inverter topology that can use control algorithms, methods and hardware independent of the number of voltage levels chosen. It is thus a further advantage that already exiting control systems may be reused for this new topology.

It is yet another object of the present invention to present a multilevel arrangement that requires a reduced number of DC buses. Ideally a single DC bus, arranged as a common DC link is sufficient.

### SUMMARY OF THE INVENTION

The present invention is related to a multilevel voltage arrangement having a transformer and a power converter or inverter comprising one or more common DC links connectable to a power source, wherein said arrangement comprises at least one first set of H bridges being connected to said common DC link. Each of said H bridges comprise at least a first node and a second node, and at least one transformer comprises a primary side having at least one winding with a first end and a second end in an open end configuration accessible from outside the transformer. The arrangement further has the first end of said winding being connected to the first node of said H bridge, and having the second end of said winding being connected to said second output node. Control means are also present and configured for controlling H bridges so as to achieve a multilevel voltage signal between the first node and the second node of said H bridges.

The term power converter must normally be understood to encompass power inverters. In general, any conversion between DC and AC systems falls within the terms of this definition irrespective of any frequency and waveform shape relative to power inputs or power outputs.

The power arrangement may also include control means configured to achieve a three level voltage output between the first node and the second node of said H bridges. Furthermore the power arrangement of system may be built as a single DC bus. Furthermore, the common DC link may have inputs configured to be connected to a DC power source, preferably built as one or more solar cells.

Inductive filters connected between the first and second nodes of said first set of H bridges and the first and second ends of said transformer wirings may be installed. Said filters reduce transients, spikes and the undesired harmonic behaviour or THD.
Back to back topologies are particularly advantageous. They have a second set of H bridges with first nodes and second nodes connectable to first second ends of wirings corresponding to a generator, wherein said second set of H bridges is connected to said common DC link so as to achieve a back to back configuration with said first set of H bridges.

The transformer generally has a secondary side, preferably comprising wiring in a delta or star configuration, directly connectable to a power distribution line or grid.

The present topology is also useful for statcom applications. In these applications the secondary side of the transformer is connected to a said grid and configured to receive power therefrom, wherein the control means is configured to store power in capacitors or accumulators comprised in said common DC link and said control means is configured to deliver said stored power back onto the grid. Thus, said converter may function as a reactive power source or as a reactive power sink.

Control systems are equally possible in the present invention. A control arrangement for a power generator or inverter comprises a power arrangement as previously explained, means for measuring the voltage level at the common DC link, means for measuring currents and voltages levels at the outputs from a first set of H bridges, wherein said control means for controlling switching operation of said first set of H bridges are configured to be based on voltage levels measured at the common DC link, and currents and voltage levels measured at the outputs from said first set of H bridges.

### FIGURES

Figure 1 shows m stages arranged in parallel of a three voltage level back-to-back full power converter connected to a generator.
Figure 2 shows a three level voltage back-to-back full power converter.
Figure 3 shows a three voltage level power converter for a photovoltaic systems.
Figure 4 shows an three voltage level power inverter system for statcom applications.
Figure 5 shows a control architecture for a three level back to back power converter.

### DESCRIPTION OF THE PREFERRED EMBODIMENTS

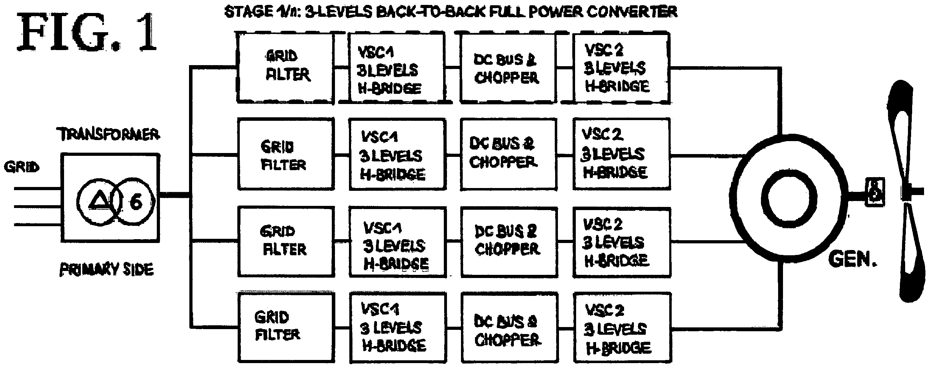

Figure 1 shows an arrangement with m stages in parallel, m being a natural number, configured for power generation and conversion. Many applications require handling large amounts of generated power. Non limiting examples include direct drive applications, wherein a wind turbine shaft directly transmits power to the electrical power converter from the rotor. To cope with large values of power, several electrical converters are place in parallel. Each of the m stages will take a fraction of the total power so as not to surpass their nominal rated values, especially those relating to the semiconductor switches that might result in component failures.

The generator (gen) is preferably a wind turbine. Stator windings from the converter are connected to a second voltage source converter (VSC2) which is built as a multilevel H bridge. Grid filters may be placed at the output of the stator windings so as to limit the dv/dt, namely large values from the voltage time derivative in the generator (gen).

The windings at the stator adopt an open end configuration. This means that the winding ends are visible and can be directly connected to circuits outside the stator. This arrangement differs from usual star or delta wiring configurations.

The second voltage source converter (VSC2) is connected to a common DC link. Said link is normally implemented as a single DC bus (DC Bus). The module advantageously may have an overvoltage or overcurrent protection module, namely a chopper circuit.

The common DC link (DC bus) is connected to a fist voltage source converter (VSC1), implemented as a multilevel H bridge and especially as a three level voltage converter. The topological arrangement of said H bridge is in a back to back configuration with the H bridges from the second voltage converter (VSC2). The the first (VSC1) and second (VS2) voltage converters are connected to the same common DC link, preferably the DC bus.

The first voltage source converter (VSC1) is connected to the primary side of a transformer (T). Said primary side collects at least a winding from each of the m stages in parallel with an open end winding arrangement. This means that the ends of said windings are all connectable to electrical circuits and/or modules outside the transformer (T). Advantageously grid filters, mostly built as inductance circuits, are arranged before the transformer.

The secondary side of said transformer, normally having a delta or star configuration, is preferably connected to the grid of power distribution grid or network.

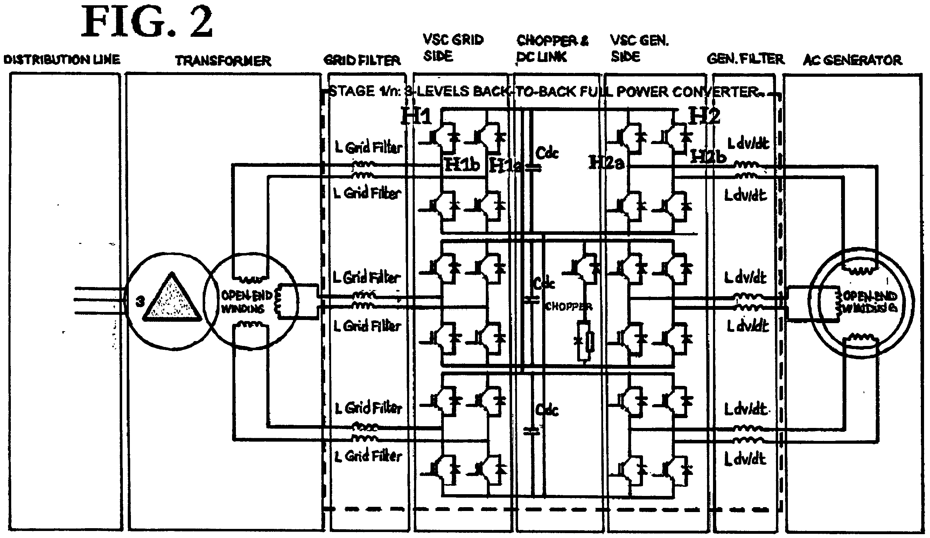

Figure 2 shows a preferred embodiment of one of the m stages from figure 1. Figure 2 shows a three phase three level back to back full power converter. The generators have preferably three open end windings. Thus, 2 wires from each winding are connectable to modules and circuits outside the generator.

Windings related to a generator (gen), especially for a wind turbine generator, are connected to a second set of H bridges. Said second set having m of said H bridges, m being a natural number.

Preferably, windings related to a generator are either attached to a generator shaft or make part of the stator windings surrounding the rotor. There are preferably m windings in an open end disposition. This means that each of the winding ends is accessible from the generator output. Various types of generators are equally possible in the present invention. Permanent magnet synchronous generators, wounded rotor synchronous generators and squirrel cage induction machines.

A first end of each winding is connected to a first input node (H2a) of an H bridge from the second set (H2) of H bridges. In its turn a second end of said winding is connected to a second input node (H2b) of said H bridge from the second set (H2) of H bridges.

The second set (H2) of H bridges is arranged in parallel. All the outputs from said second set (H2)of H bridges are connected to a common DC link, preferably constituting a single DC bus. The common DC link is built as one or more capacitors or accumulators in parallel and function as a power and energy collector or storage.

At its turn said common DC link is connected in parallel to a first set (H1) of bridges. Said first set has m bridges, m being a natural number.

Each H bridge from said first set (H1) has a first output node connected to a first end of each winding at the primary side of a transformer (T) and a second output node connected to a second end of said winding form the primary side of said transformer (T)

The connection between the first and second output nodes from each H bridge and the ends of the wirings may be made directly or through the intermediate of grid filters (L Grid Filter).

The primary side of the transformer has an open winding configuration. The first end of each winding is connected to the first output (H1a) node from the first set (H1a) of bridges whereas the second end of each winding is connected to the second node (H1b) from said corresponding H bridge from the first set (H1).

Control means are arranged to control the on and off switching operation status present in the H bridges. Said switches are typically made of a semiconductor type such as IGBTs, IGCTs, GTOs, thyristors and the like.

The number of phase-to-phase voltage levels in the present embodiment is three, namely +Udc, -Udc, 0. Said voltages appear between the first and second ends of each winding. The three level topology attains the unexpected effect to be extremely efficient when mitigating the number and intensity of undesired harmonics (THD) and yet achieve a simple electronic circuit construction and control system.

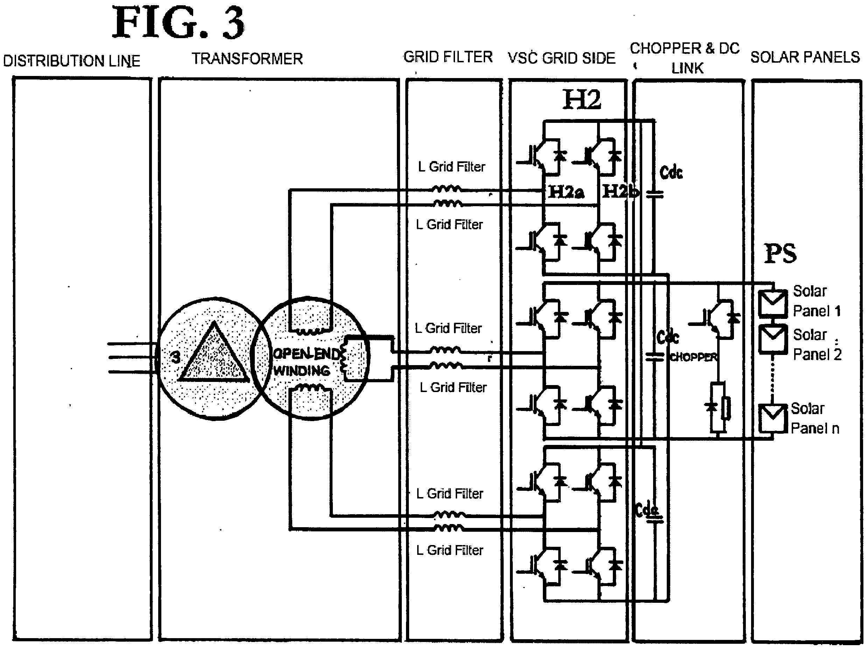

There are three H bridges arranged in parallel in Figure 3. This embodiment is particularly simple when conveying energy to the grid through a three phase transformer.

The rated power for said embodiment has a range between 0.5 MVA and 20 MVA. IGBTs semiconductors are the preferred option for H bridge switches. Switches are driven by the control means at an operating frequency range between 0.1 KHz and 10 k Hz, depending on semiconductor type and its wording voltage.

The rms voltage value for the line has a range between 400 volts and 4350 volts, The common link DC voltage value has equally an operating range between 400 volts and 4350 volts.

When applied to wind turbine application, the system may be implemented in medium voltage (MV). It then achieves the advantage of requiring less current compared to that used for low voltage (LV) systems.

Figure 3 shows the application of the multilevel H bridge topology to a photovoltaic system. In this case the power source is built as one or more photovoltaic solar panels. Said panels are preferably piled to one another in a serial connection configuration in order to achieve a voltage difference. The photovoltaic panels are connected to a common DC link, normally a single DC bus. Said common DC link stage may be arranged as a single capacitor capable of accumulating the electrical energy from the solar panels or as a number of distributed accumulators or capacitors connected in parallel across the single DC bus.

The common DC link is connected in parallel to a number n of H bridges. Each H bridge has a first node (H1a) connected to a first end of each winding at the primary side of the transformer and a second node (H1b) connected to the second end of each winding

The connection between the nodes of each H bridge and the ends of the wirings may be made directly or through the intermediate of grid filters (L).

The primary side of the transformer has an open winding configuration. The first end of each winding is connected to the first node (H1a) of a corresponding H bridge whereas the second end of each winding is connected to the second node (H2b) said corresponding bridge.

Control means are arranged to control the on and off switching operation status present in the H bridges. Said switches are typically made of a semiconductor type such as IGBTs, IGCTs, GTOs, thyristors and the like. The number of voltage levels in the present embodiment is three, namely +Udc, -Udc, 0. Said voltages appear between the first and second ends of each winding.

There are three H bridges arranged in parallel in Figure 3. This embodiment is particularly simple when conveying energy to the grid through a three phase transformer.

The rated power for said embodiment has a range between 0.5 MVA and 20 MVA. IGBTs semiconductors are the preferred option for H bridge switches. Switches are driven by the control means at an operating frequency range between 0.1 KHz and 10 k Hz depending on semiconductor type and working voltage.

The rms voltage value for the line has a range between 400 volts and 4350 volts. The common link DC voltage value has equally an operating range between 400 volts and 4350 volts.

Another advantage from the present invention, especially from the embodiment in figure 3, is that the voltage level of the common DC-link is not required to be higher than that achieved at the output AC voltage line. This topology then allows for a relatively low common DC link voltage level.

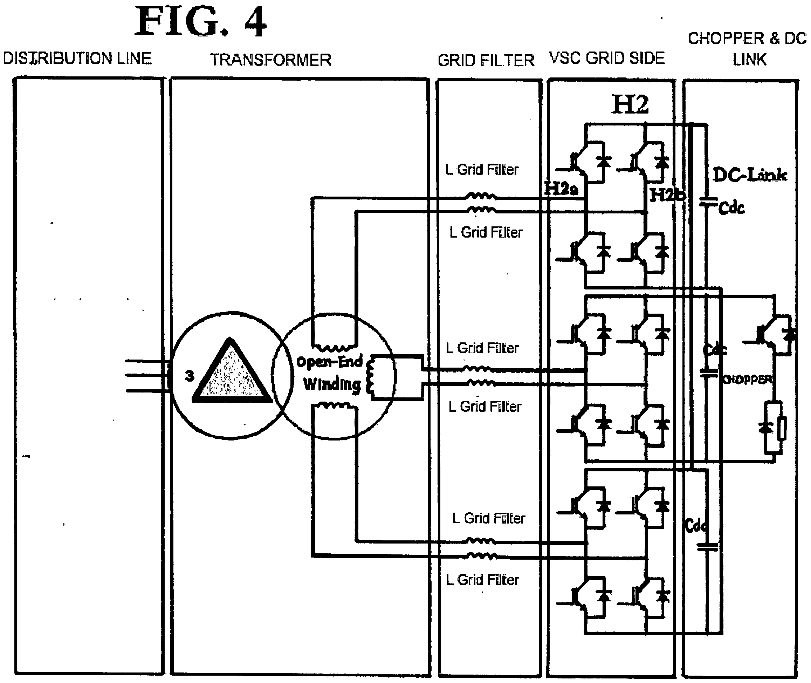

Figure 4 shows another embodiment relating to an inverter for statcom applications. Reactive power from the grid can be captured in said inverters and be reused in the grid.
In this embodiment the grid is connected to the primary side of a transformer (T), typically with wirings having a delta or star configuration. The secondary side of said transformer (T) has a number m of wirings in an open end configuration. Each first and second end of said wirings is connected to a respective first node (H1a) and a second node (H1b) from a first set (H1) of m H bridges.

Said first set (H1) of H bridges is connected in parallel to a common DC link built as a power and energy capacitor or accumulator. Control means, not shown in Figure 4, control the opening and closing switching events so as to store power from the grid and/or bringing said power back the grid or network distribution line. Thus, the inverter operation is two-fold, where power is stored and power is delivered. In short, the may act as a reactive power sink and as a reactive power source.

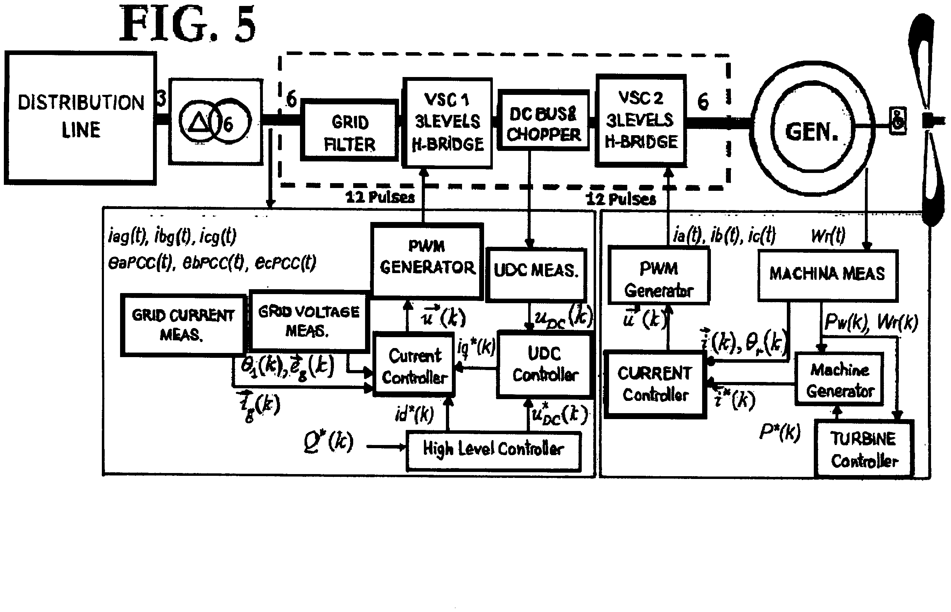

Figure 5 shows a non limiting embodiment of a control architecture for a three level back to back power converter. The control systems may preferably have input variables and measured variables as the angular velocity of the generator, the DC voltage level at the DC bus, the three output current and voltage levels from the converter, and grid current and voltage measurements.

The switches from the first set (H1) and the second set (H2) of H bridges are controlled. A control scheme may use pulse modulating techniques. As mentioned before, this arrangement is particularly simple if three level voltages are used. Harmonics are greatly reduced while the hardware does not need to undergo any major redesigning.

## Claims

1. A multilevel voltage arrangement having a transformer (T) and a power converter or inverter comprising:
at least one common DC link (DC link) directly or indirectly connectable to a power source (PS, gen, Grid),
a first set (H1) of H bridges comprising at least one H bridge being connected to said common DC link, wherein
each of said H bridges comprises at least a first node (H1a) and a second node (H1b),
**characterized in**
at least one transformer (T) comprising a primary side having at least one winding with a first end and a second end in an open end configuration accessible from outside the transformer (T), having
the first end of said winding being connected to the first node of said H bridge, and having
the second end of said winding being connected to said second output node, and having
control means configured for controlling said H bridges so as to achieve a multilevel voltage signal between the first node (H1a) and the second node (H1b) of said H bridges.

2. A power arrangement according to claim 1 wherein
said control means are configured to achieve a three level voltage output (+Udc,-Udc,0) between the first node (H1a) and the second node (H1b) of said H bridge.

3. A power arrangement according to claims 1 or 2 wherein
the common DC link is built as a single DC bus.

4. A power arrangement according to claims 1 or 2 wherein
said common DC link has inputs configured to be connected to a DC power source.

5. A power arrangement according to claim 4
wherein said DC power source comprises one or more solar cells.

6. A power arrangement according to claims 1 or 2 further having inductive filters (L) connected between the first (H1a) and second (H1b) nodes of said first set (H1) of H bridges and the first and second ends of said transformer wirings.

7. A power arrangement according to claims 1 or 2 having a second set (H2) of H bridges with first nodes (H2a) and second nodes (H2b) connectable to first second ends of wirings corresponding to a generator,
said second set (H2) of H bridges being connected to said common DC link so as to achieve a back to back configuration with said first set (H1) of H bridges.

8. A power arrangement according to claim 1 or 2 wherein said transformer comprises a secondary side, preferably comprising wiring in a delta or delta configuration, directly connectable to a power distribution line or grid.

9. A power arrangement according to claim 8 where
said secondary side of said transformer (T) is connected to a said grid and configured to receive power therefrom, and
said control means are configured to store said power in capacitors or accumulators comprised in said common DC link and
said control means is configured to deliver said stored power back onto the grid.

10. A control arrangement for a power converter or inverter comprising:
a power arrangement according to any of the preceding claims, and
means for measuring the voltage level at the common DC link, and
means for measuring currents and voltages levels at the outputs from a first set (H1) of H bridges, wherein
said control means for controlling switching operation of said first set of H bridges (H1) are configured to be based on said voltage level measured at the common DC link, and on currents and voltage levels measured at the outputs from said first set (H1) of H bridges.
